# EUROPEAN PATENT APPLICATION

(11) **EP 1 837 882 A1**
(43) Date of publication of application: **26.09.2007**
(21) Application number: 06005865.8
(22) Date of filing: 22.03.2006
(51) Int. Cl.: G21F 9/16, G21F 9/34

(54) **Methods and compositions for disposal of radioactive liquid wastes**

(71) Applicant: Enco S.r.l., 31050 Ponzano Veneto TV (IT)
(72) Inventor: Collepardi, Mario, 31050 Ponzano Veneto (TV) (IT); Grossi, Giuseppe, 31050 Ponzano Veneto (TV) (IT); Pellizon, Marta, 31050 Ponzano Veneto (TV) (IT); Ventura, Giancarlo, 31050 Ponzano Veneto (TV) (IT)
(74) Representative: Banfi, Paolo

(57) **Abstract**

The present invention provides methods and compositions for the immobilization by solidification of radioactive liquids produced during the reprocessing of MTR (Materials Testing Reactors) and other spent nuclear fuels.

## Description

The present invention provides methods for disposal of radioactive liquids produced during the reprocessing of MTR (Materials Testing Reactors) and other spent nuclear fuels. More specifically, the invention provides methods and compositions for the immobilization of radioactive liquid wastes by means of a binding mixture that is characterized by high fluidity in the liquid state and good compressive strength in the hardened state.

### BACKGROUND OF THE INVENTION

The radioactive waste waters produced by nuclear plants or by spent nuclear fuel reprocessing essentially consist of acidic aqueous solutions containing significant amounts of inorganic salts, mainly sodium, aluminum, iron, mercury and uranium nitrates.

There are many methods for conditioning by cementiation radioactive wastes from nuclear plants. PCT/GB2003/002870 describes a method for the encapsulation of nuclear material, which comprises treating the latter with an encapsulant containing a cementitious material, such as Portland cement, and curing said cementitious material.

JP 19960100998 discloses a cementing material containing 30% alumina cement, 70% river sand and chemical admixtures such as lithium citrate (0.1 %) to prevent alkali-aggregate reaction, aluminum lactate, sepiolite and a condensation sodium phosphate aqueous solution.

JP 19970004938 describes a method by which water radioactive wastes containing sodium metaborate are heated and then mixed with granulated blast furnace slag, fine powder and a dispersing agent to improve the fluidity of the fresh mixture. Silica is the preferred form of fine powder, whereas the dispersing agent is acrylic acid, maleic acid copolymer or other similar products. Moreover, alkali metals or hydroxides of alkali earth metals, preferably in the form of carbonates or silicates, are used as hardening-stimulating admixtures.

According to JP 19970233692 and EP 0 709 859, the solidification of radioactive waste can be carried out with a hydraulic inorganic material based on calcium silicate or calcium aluminate, and 0.5-5% of an inorganic expansive agent based on a mixture of bentonite, silica, one or two types of kaolinite. Moreover, a water reducing product composed of a positive ion surface active agent is used as fluidizing agent. According to EP 0 831 498, the same binding mixture can be used for disposal of metallic aluminum-containing solid waste by reacting radioactive solid waste containing metallic aluminum with an alkali solution to generate hydrogen gas and then mixing the resulting reaction liquid with a solidifying material containing a latent hydraulic material as a main component.

US 5,732,363 discloses a solidifying material that can be used for cementing radioactive waste, which comprises a latent hydraulic component, an ultra-fine powder substance in form of silica fume, fly ash, silica sand, kaolin, calcium carbonate and/or other inorganic products, a dispersing agent in form of a polymer having carboxylate groups, and other components such as a needle mineral powder in form of wollastonite, sepiolite, chrysotile, and other fibrous products, a water soluble nitric acid salt such as sodium nitrate, a thickener in form of cellulose derivatives, hydrophilic polymers, selected from polyacrylic acid salts, polyacrylamide, acrylic acid and other thickening agents, water to adjust the viscosity of the fresh mixture in the range of 500-30,000 cps, a cure stimulating agent in form of sodium hydroxide, sodium carbonate sodium silicate and calcium hydroxide.

### DESCRIPTION OF THE INVENTION

In a first aspect, the invention provides a composition for the immobilization through solidification of radioactive acidic aqueous solutions, said composition containing ground granulated blast furnace slag (ggbfs), fly ash from coal thermal plant, calcium hydroxide (CH) and carbohydrates. The composition of the invention is preferably in the form of a powder mixture containing - expressed as % on the total weight of the composition - 50-70% ggbfs, 15-35% fly ash, 5-20% CH and 0.01-2% carbohydrates. The granulated blast furnace slag is preferably ground to a fineness in the range of 2000-10,000 cm²/g, more preferably 3500-4500 cm²/g, when measured according to the Blaine test method. According to the invention, the term "carbohydrate" includes monosaccharides, oligosaccharides and polysaccharides as well as substances derived from monosaccharides by reduction of the carbonyl group (alditols), by oxidation of one or more terminal groups to carboxylic acids, or by replacement of one or more hydroxy group(s) by a hydrogen atom, an amino group, a thiol group or similar heteroatomic groups, The carbohydrates are preferably polyols of formula HOCH2[CH(OH)]nCH2OH, with n= 1-4, which are also known as alditols as they are formally derivable from an aldose by reduction of the carbonyl group. Preferably the alditols are selected from the group consisting of xylitol (HOCH2[CH(OH)]3CH2OH), mannitol (HOCH2[CH(OH)]4CH2OH), arabinitol (HOCH2[CH(OH)]3CH2OH - D isomer), arabinitol (HOCH2[CH(OH)]3CH2OH - L isomer) ribitol (HOCH2[CH(OH)]3CH2OH) and sorbitol (HOCH2[CH(OH)]4CH2OH- D isomer). The latter (D-sorbitol) is the most preferred and is generally used at a concentration of 0.05-1% by weight. The most preferred composition contains 64.7% ggbfs, 25% fly ash, 10% CH and 0.3% D-sorbitol.

Surprisingly the composition according to the invention performs much better, in terms of fluidity of the fresh mixture and strength in the hardened state, than those based on traditional Portland cement or blends thereof with other cementitious components such as ggbfs, slag, natural pozzolan or fly ash. The binding capability of the powder mixture according to the invention is based on the alkali-activation of the ggbfs by NaOH, the pozzolanic reaction due to the presence of calcium hydroxide and the plasticizing effect of the polyhydric alcohol.

The fresh mixture is so fluid (consistence of 100-200% in the flow table test according to EN 1015-3) that it can be placed in a metallic drum without compaction. Typical 90-day cube compressive strength is in the range of 20-40 MPa. This strength value, albeit not needed for mechanical requirements, indicates that the consolidated material is water-tight and durable and it can resist very effectively to the leaching action of pure water.

In another embodiment, the invention provides a method for immobilizing by solidification low and intermediate level radioactive liquid wastes and particularly the aqueous solution produced by reprocessing of MTR (Material Testing Reactors) spent nuclear fuels, said method comprising:
1) bringing the aqueous solution to at least pH 12, preferably pH 14, by addition of an alkali-activator such as sodium carbonate or sodium silicate, preferably by addition of NaOH;
2) mixing the aqueous solution with a composition as defined above;
3) placing the mixture in a suitable container where hardening occurs.

The aqueous solution, which acts as mixing water, is generally an acidic solution containing significant amounts of inorganic salts, particularly nitrates such as sodium, aluminum, iron, mercury and uranium nitrates. This aqueous solution is produced during the reprocessing of MTR (Materials Testing Reactors) and other spent nuclear fuels, It is alkalinized e.g. by NaOH to bring the pH to at least 12, preferably 14, prior to its combination with the binding mixture or composition according to the invention. A liquid-binder (i.e. a solution-composition) weight ratio in the range of 0.5-0.7 (equivalent to a free water-solid ratio of about 0.35-0.50), corresponding to a compressive strength of the consolidated material in the range of 20-40 MPa at the age of 90 days, is preferred.

After alkalinization, the liquid containing radioactive wastes and the composition are kneaded or mixed and placed in a suitable container where the hardening process takes place.

In a further aspect, the invention provides the use of a composition as above defined for the disposal of radioactive liquid wastes.

The following examples further illustrate the invention.

### Example 1

The following acidic liquid was used to simulate a typical MTR composition: nitric acid 15.5 M = 51 ml; sulphuric acid 1M = 15.5 ml; aluminum nitrate nona-hydrate = 425 g ; ferric nitrate nona-hydrate = 2,78 g; mercury nitrate =1.2 g; distilled water up to 1000 ml of aqueous solution. This solution was neutralized by adding 0.56 moles of NaOH 19 M. Then an excess of 10% or 20% of NaOH with respect to this amount was used to transform the aluminum salts in a water soluble form (AlO2-) at pH of about 12 and 14 respectively.

The liquid (at pH of 12 or 14) was mixed with a binding powder solid containing ggbfs, fly ash, CH and chemical admixture. The liquid-solid ratio was adjusted in the range of 0.50-0.70 in order to obtain fresh mixtures with different fluidity (consistence as percentage of the initial diameter of the fresh mixture) as measured by the flow table test. Then the mixture was placed in prismatic specimens and the compressive strength was determined at day 1, 7, 28 and 90. The following solid dispersing agents have been used: naphthalene sulphonated polymer (PNS); carboxylate acrylic polymer (PCA); D-sorbitol (DS).

### Example 2

The following binding powder products were mixed with the liquids at pH 12 described in the Example 1:
- powder No. 0 = Portland cement as CEM II 42.5 R
- powder No. 1= 80% ggbfs (Blaine 7300 cm2/g)+10% fly ash+10% CH;
- powder No. 2= 70% ggbfs (Blaine 7300 cm2/g)+15% fly ash+15% CH;
- powder No. 3 = 65% ggbfs (Blaine 7300 cm2/g)+25 % fly ash+10% CH;
- powder No. 4 = 50% ggbfs (Blaine 7300 cm2/g)+20% fly ash +30% CH;
- powder No. 5 = 40% ggbfs (Blaine 7300 cm2/g)+40 % fly ash+40% CH.
- powder No. 6 = powder No. 3 with addition of 1% dispersing agent PNS;
- powder No. 7 = powder No.3 with addition of 0.5% dispersing agent PCA;
- powder No. 8 = powder No.3 with addition of 1% DS;
- powder No. 9 = powder No,3 with addition of 0.5% DS;
- powder No. 10 = powder No.3 with addition of 0.05% DS.

The following flow % of the fresh mixtures were measured at the end of the mixing process (3 min) using a liquid-solid ratio of 0.50:
FLOW TEST MEASUREMENTS (%):
   powder No. 0 = 25
   powder No. 1 = 45
   powder No. 2=50
   powder No. 3 = 55
   powder No. 4 = 60
   powder No.5 = 65
   powder No. 6 = 60
   powder No.7 = 50
   powder No. 8 = 200
   powder No. 9 = 190
   powder No 10 = 185

The above data indicate that the binding powder mixtures (No. 1-5) without dispersing agent are very stiff when a liquid-solid ratio of 0.50 by weight is adopted and therefore they are difficult to place in the metallic drum in the absence of compaction. Moreover, in the presence of PNS or PCA there is no significant improvement of fluidity of the fresh mixture. Instead, D-sorbitol acts as an excellent dispersing agent since it can transform a stiff mixture into a self-leveling mixture even when a liquid-solid ratio as low as 0.50 is used.

The compressive strengths (MPa) of the above mixtures in the hardened state at day 1, 7, 28 and 90 are as follows:
powder No. 0 = 0.0 - 12.8 - 21.7 - 28.9
powder No. 1 = 0.5 - 25.7- 30.1- 37.4
powder No. 2 = 1.2 - 30.1 - 37.6 - 37.9
powder No. 3 = 1.2 - 34.6 - 42.8 - 47.7
powder No. 4 = 0.3 - 19.7 - 34.7 - 39.4
powder No. 5 = 0.1 - 15.7 - 30.2 - 35.8
powder No. 6 = 0.3 - 27.6 - 35.7 - 40.2
powder No. 7 = 0.0 - 20.9 - 35.4 - 39,2
powder No. 8 = 0.0 -29.7 - 38.6 - 40.1
powder No. 9 =0.6-33.9-41.4-48.8
powder No. 10 = 1.1 - 34.1 - 41.5 - 49.9

The above results indicate that the compositions according to the invention are capable of hardening with a 90-day compressive strength as high as 35-45 MPa. Moreover, the addition of D-sozbitol (0.05-1 %) does not reduce the compressive strength at 7 and 90 days compared to the composition without dispersing agent even if it produces a significant increase of the fluidity of fresh mixture at the end of the mixing process.

### Example 3

This fluidity and compressive strength of the products were measured using a 20% excess of NaOH 19 M with respect to the amount needed to neutralize the acidic liquid, using the same liquid-solid ratio of 0.50 and same composition of binding powders as shown in the Example 2.
1) Flow % of the fresh mixtures at the end of the mixing process (3 min):
   powder No. 1 = 40
   powder No. 2 = 55
   powder No. 3 = 50
   powder No. 4 = 55
   powder No. 5 = 60
   powder No. 6 = 65
   powder No. 7 = 50
   powder No. 8 =195
   powder No. 9 = 190
   powder No. 10 = 190
   These results confirm that the dispersing agents in form of PNS or PAC are not effective whereas D-sorbitol is very effective and produces a significant flow increase.
2) compressive strengths (MPa) of the above mixtures in the hardened state at day 1, 7, 28 and 90:
   powder No.1 = 0.0; 29.7; 40.5; 45.9
   powder No.2 = 1.1; 33.1; 39.6; 47.9
   powder No.3 = 0.2; 41.1; 49.6; 54.7
   powder No.4 = 0.3; 29.7; 38.7; 44.8
   powder No.5 = 0.1; 21.9; 32.8; 39.7
   powder No.6 = 0.2; 29.6; 39.3; 47.4
   powder No.7 = 0.1; 26.7; 36.4; 42.2
   powder No.8 = 0.2; 33.5; 40.4; 44.3
   powder No.9 = 0.5; 36.9; 44.4; 50.8
   powder No.10= 1.0; 40.1; 49.5; 53.8

These results confirm that the compositions of the binding powder according to the invention are capable to reach a level of compressive strength as high as 40-50 MPa when the adopted liquid-solid ratio is 0.50. D-sorbitol acts as an excellent dispersing agent without changing the compressive strength compared to the corresponding mixture without dispersing agent.

### Example 4

Influence of the liquid-solid ratio (0.50; 0.60; 0.70) on the fluidity and compressive strength of the mixture corresponding to the powder No. 3 according to the Example 2 in the presence of 0.02% D-sorbitol as dipersing agent.

Flow measurements of fresh mixtures at the end of the mixing process:
liquid-solid ratio = 0.50; flow = 115%
liquid-solid ratio = 0.60; flow = 130%
liquid-solid ratio = 0.70; flow = 145%

The mixtures according to the invention show higher fluidity when the liquid-solid ratio is increased.

The mixtures in the hardened state reach the following compressive strengths:
liquid-solid ratio = 0.50; compressive strength at day 1, 7, 28, 90 = 0.4; 41.9; 50.3; 53.9
liquid-solid ratio = 0.60; compressive strength at day 1, 7, 28, 90 = 0.0; 27.9; 37.4; 43.0
liquid-solid ratio = 0.70; compressive strength at day 1, 7, 28, 90 = 0.0; 17.8; 26.2; 34.5

These data indicate that the lower the liquid-solid ratio the higher is the compressive strength.

### Example 5

Influence of the type of alditol on the performance of the mixture (powder No. 3 according to the Example 2). The liquid-solid ratio was 0.50 and 0.05% of each alditol (on the powder) was added. The following alditols were used:
Sorbitol (C6) HOCH2[CH(OH)]4CH2OH (D isomer)
Xylitol (C5) HOCH2[CH(OH)]3CH2OH
Mannitol (C6) HOCH2[CH(OH)]4CH2OH
Arabinitol (C5) HOCH2[CH(OH)]3CH2OH (D isomer)
Arabinitol (C5) HOCH2[CH(OH)]3CH2OH (L isomer)
Ribitol (C5) HOCH2[CH(OH)]3CH2OH

Measurements obtained at the end of the mixing process (3 min):
powder No.3 (no admixture) = 50%
powder No.3 with D-sorbitol = 190%
powder No.3 with Xylitol =185%
powder No.3 with Mannitol = 165%
powder No.3 with D-Arabinitol = 155%
powder No.3 with L-Arabinitol = 160%
powder No.3 with Ribitol = 145%

The following compressive strength (in MPa) were obtained respectively at day 7 and 90
powder No.3 (no admixture) =41.1; 54.7
powder No.3 with D-sorbitol = 40.7; 53.8
powder No.3 with Xylitol = 38.9; 50.2
powder No.3 with Mannitol = 45.8; 50.8
powder No.3 with D-Arabinitol = 39.6; 48.9
powder No.3 with L-Arabinitol = 44.8; 53.9
powder No.3 with Ribitol = 39.0; 48.8

These results indicate that the use of olditols according to the invention facilitates the placement of the fresh mixture since its fluidity is significantly increased with negligible reduction in the compressive strength at 90 days compared to the stiff mixture without admixture.

### Example 6

A ggbfs with a Blaine fineness of 3500 or 4000 cm2/g can be advantageously used according to the invention. Compositions of the examined powder products:
Powder A containing 65% ggbfs (Blaine 4000 cm²/g) + 25% fly ash + 10% CH
Powder A' containing 64.9% ggbfs (Blaine 4000 cm2/g) + 25% fly ash + 10% CH + 0.05% D-sorbitol
Powder B containing 65% ggbfs (Blaine 3500 cm2/g) + 25% fly ash + 10% CH
Powder B' containing 64.9% ggbfs (Blaine 3500 cm2/g) + 25% fly ash + 10% CH. + 0.05% D-sorbitol

Flow measurements obtained at the end of the mixing process (3 min):
Powder A = 90%
Powder A' = 150%
Powder B = 95%
Powder B' = 160%.

Compressive strengths obtained at day 7 and 90:
Powder A = 25.6 MPa - 40.4 MPa
Powder A'= 24.5 MPa - 40.7 MPa
Powder B =21.9 MPa-36.7 MPa
Powder B' = 20.8MPa - 34.9 MPa.

These results indicate that ggbfs with a Blaine fineness as low as 3500-4000 cm2/g can be advantageously used according to the invention.

## Claims

1. A composition for the immobilization by solidification of radioactive liquid wastes, containing ground granulated blast furnace slag (ggbfs), fly ash, calcium hydroxide and carbohydrates.

2. A composition according to claim 1, containing 50-70% ggbfs, 15-35% fly ash, 5-20% calcium hydroxide and 0.01-2% carbohydrates (% by weight).

3. A composition according to claim 1, wherein the ground granulated blast furnace slag has a Blaine fineness of from 2000 to 10000 cm²/g.

4. A composition according to claim 3, wherein said fineness is between 3500 and 4500 cm²/g.

5. A composition according to claim 1, containing fly ash from coal thermal plant.

6. A composition according to claim 1, wherein the carbohydrates are polyols of formula HOCH₂[CH(OH)]ₙCH₂OH, with n= 1-4.

7. A composition according to claim 6, wherein said polyols are selected from the group consisting of xylitol (HOCH₂[CH(OH)]₃CH₂OH), mannitol (HOCH₂[CH(OH)]₄CH₂OH), D-arabinitol (HOCH₂[CH(OH)]₃CH₂OH), L-arabinitol (HOCH₂[CH(OH)]₃CH₂OH) ribitol (HOCH₂[CH(OH)]₃CH₂OH) and D-sorbitol (HOCH₂[CH(OH)]₄CH₂OH).

8. A composition according to claim 7, containing 0.02-1% by weight of D-sorbitol.

9. A composition according to claims 1, 2 and 8, containing 50-70% ggbfs, 15-35% fly ash, 5-20% calcium hydroxide and 0.1-2% polyols (% by weight).

10. A method for immobilizing by solidification low and intermediate level radioactive liquid wastes and particularly the aqueous solution produced by reprocessing of MTR (Material Testing Reactors) spent nuclear fuels, said method comprising:
i) bringing the aqueous solution to at least pH 12, preferably pH 14, by addition of an alkali-activator, preferably NaOH;
ii) mixing the aqueous solution with a composition as defined in claims 1-9;
iii)placing the mixture in a suitable container where hardening occurs.

11. A method according to claim 10, wherein said aqueous solution is acidic and contains sodium, aluminum, iron, mercury and uranium nitrates.

12. A method according to claim 10, wherein in step ii) the aqueous solution and the composition are mixed in a weight ratio of from 0-5 to 0.7.

13. The use of a composition according to claims 1-9 for disposal of radioactive liquid wastes.

14. The use according to claim 13, for disposal of aqueous solutions produced by reprocessing of MTR (Material Testing Reactors) spent nuclear fuels.
